# FASCICULE DE BREVET EUROPEEN

(11) **EP 1 026 422 B1**
(45) Date de publication et mention de la délivrance du brevet: **13.08.2003**
(21) Numéro de dépôt: 00400108.7
(22) Date de dépôt: 17.01.2000
(51) Int. Cl.: F16G 11/00, E06B 9/326

(54) **Dispositif de raboutage pour chaînette de treuil à cordon**
Verbindungsvorrichtung für die Kette einer Seilwinde
Connecting device for a cord winch chain

(30) Priorité: 08.02.1999 FR 9901453
(43) Date de publication de la demande: 09.08.2000
(73) Titulaire: Zurfluh Feller, 25150 Roide (FR)
(72) Inventeur: Allemand, Jean-Marie, 25190 Villars sous Dampjoux (FR)
(74) Mandataire: Armengaud Ainé, Alain

(56) Documents cités:
- DE-C- 2 908
- FR-A- 2 324 931
- GB-A- 189 516 221
- US-A- 1 614 751
- US-A- 4 214 488
- US-E- R E17 111

## Description

La présente invention est relative à un dispositif de manipulation d'un treuil à cordon. Elle vise plus particulièrement les cordons ou chaînettes à billes qui, grâce aux excroissances prévues tout au long de l'âme centrale du cordon, engrènent au travers des flasques parallèles formant le treuil.

Ces treuils à cordon appartiennent à la famille des organes de commande des stores et volet roulant. Il existe sur le marché une grande variété de modèles de volets roulants qui se différencient notamment par leur application (destinés à être montés dans du neuf ou destinés à être montés dans de la réhabilitation), par leurs dimensions (longueur, largeur, profondeur, dimensions du tablier), par leur destination (hauteur sous plafond différente) qui imposent pour chaque cas une longueur de cordon différente qu'il est nécessaire d'adapter au coup par coup.

Les chaînettes à billes sont communément fabriquées en grande longueur, conditionnées en bobines, et ensuite découpées par l'utilisateur ou l'installateur de volet roulant à la longueur considérée, puis introduites entre les deux flasques du treuil à cordon, et enfin raboutées pour former une boucle sans fin.

Les techniques de raboutage consistent d'une part en une étape de soudage ou de collage, soit de deux portions au niveau de l'âme centrale de la chaînette, soit au niveau de deux demi-billes l'une contre l'autre. Cette technique, dont l'intérêt principal réside tout spécialement dans le caractère esthétique du résultat final, offre néanmoins un inconvénient majeur qui consiste dans la grande difficulté à transmettre des efforts au niveau de la zone de connexion.

Cette nécessité de transmission d'efforts, au travers du cordon pour le répercuter sur la cinématique permettant l'enroulement du tablier du volet roulant, est dans ce type d'application particulière impérieuse. En effet, surtout dans le sens de l'enroulement du tablier, qui correspond en fait à sa montée au travers des coulisses, l'utilisateur fournit l'énergie nécessaire pour vaincre les frottements et le poids du tablier.

Malgré les dispositifs de démultiplication dont sont de plus en plus pourvus les treuils à cordon, les efforts transmis sont incompatibles avec les degrés de résistance mécanique de la soudure ou du collage.

En outre, ces techniques d'assemblage requièrent l'utilisation d'une machine spéciale qui ne peut être utilisée qu'en atelier et non pas chez l'utilisateur final.

Une autre technique de raboutage des deux extrémités d'une chaînette à billes connue, consiste à réunir au sein d'un manchon ou d'une enveloppe, par une opération de sertissage, chacune des billes placées aux extrémités de la chaîne.

Ce procédé permet de transmettre des efforts conséquents, mais impose une surépaisseur de matière au niveau de la zone de sertissage, ce qui nuit à la flexibilité de la chaînette (création d'un dur mécanique), et qui risque de se coincer dans le mécanisme du treuil en raison du fait que la chaînette doit effectuer au moins un tour complet pour remonter ou descendre le tablier.

La présente invention vise à pallier les inconvénients des techniques connues de l'art antérieur, en proposant un dispositif de raboutage des extrémités d'une chaînette à billes, qui puisse transmettre des efforts mécaniques conséquents, tout en conservant la flexibilité de l'ensemble sans risque de coincement dans le mécanisme du treuil et qui soit aisément mis en oeuvre sur le lieu de montage du volet roulant.

On connaît par le brevet français FR 2 324 931 un dispositif d'accrochage pour un collier, qui comporte, d'une part un crochet en forme de boucle ouverte fixée à l'une des extrémités du collier, et d'autre part une porte fixée à l'autre extrémité comprenant un oeillet et un pontet d'accrochage.

On connaît également par le brevet allemand DE 2 908, un dispositif d'attache pour cordon, dont le crochet en forme de boucle ouverte et l'anneau circulaire sont vissés dans des manchons prévus à chaque extrémité du cordon.

A cet effet, la chaînette, notamment pour treuil à cordon, comportant une âme sur laquelle est reliée une pluralité d'organes d'extrémités, comprenant entre deux organes d'extrémités, au moins un dispositif de raboutage comportant, d'une part un couple de maillons formant attache rapide, et d'autre part des usinages pratiqués dans les organes d'extrémités, ladite chaînette étant se caractérise en ce que lesdits maillons présentent un profil en forme de selle dont la partie sensiblement centrale est effilée, tandis que les extrémités libres sont repliées vers l'intérieur du maillon et forment des crochets, de manière à conserver la flexibilité de l'ensemble sans risque de coincement dans le mécanisme du treuil.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue en perspective d'un volet roulant équipé d'un treuil à cordon pourvu d'une chaînette;
- la figure 2 est une vue en coupe d'une chaînette à billes pour treuil à cordon comportant le dispositif de raboutage objet de l'invention ;
- la figure 3 est une vue en perspective d'une chaînette à billes pour treuil à cordon comportant le dispositif de raboutage objet de l'invention ;
- la figure 4 est une vue en perspective, similaire à la figure 2, représentant le dispositif de raboutage en éclaté.

Selon un mode préféré de réalisation du dispositif de raboutage objet de l'invention, celui-ci comporte une chaînette à billes 1 formée d'un assemblage d'une pluralité d'organes 2 de profils variés, notamment toriques ou sphériques, enserrant un cordon 3 ou une âme. Les constituants formant la chaînette sont réalisés dans un matériau métallique ou plastique de manière à être fabriqués par des opérations industrielles de grande série. L'assemblage ainsi formé constitue une chaînette dont la longueur peut atteindre plusieurs dizaines de centimètres voire plusieurs mètres, et ce cordon, grâce au profil particulier formé en périphérie de chacune des sphères ou chacun des tores, est apte à coopérer entre les deux flasques latéraux, pourvus des formes complémentaires, d'un treuil à cordon pour l'entraînement d'un volet roulant.

Il est évident que la manoeuvre d'un treuil à cordon s'effectue, non pas à partir d'une chaînette dont la longueur aurait été choisie suffisamment importante pour assurer la course complète du tablier, celle-ci se déplaçant dans le treuil entre deux butées placées à chaque extrémité du cordon, mais pour des raisons d'esthétisme et d'aspect pratique, à partir d'un cordon dont les extrémités sont mises bout à bout de manière à former une boucle qui effectue un nombre de tours suffisant pour assurer la course complète du tablier.

Il est donc nécessaire de prévoir un dispositif de raboutage 4 qui assure la connexion des extrémités de la chaînette après en avoir défini la longueur en fonction des applications visées par le mécanisme.

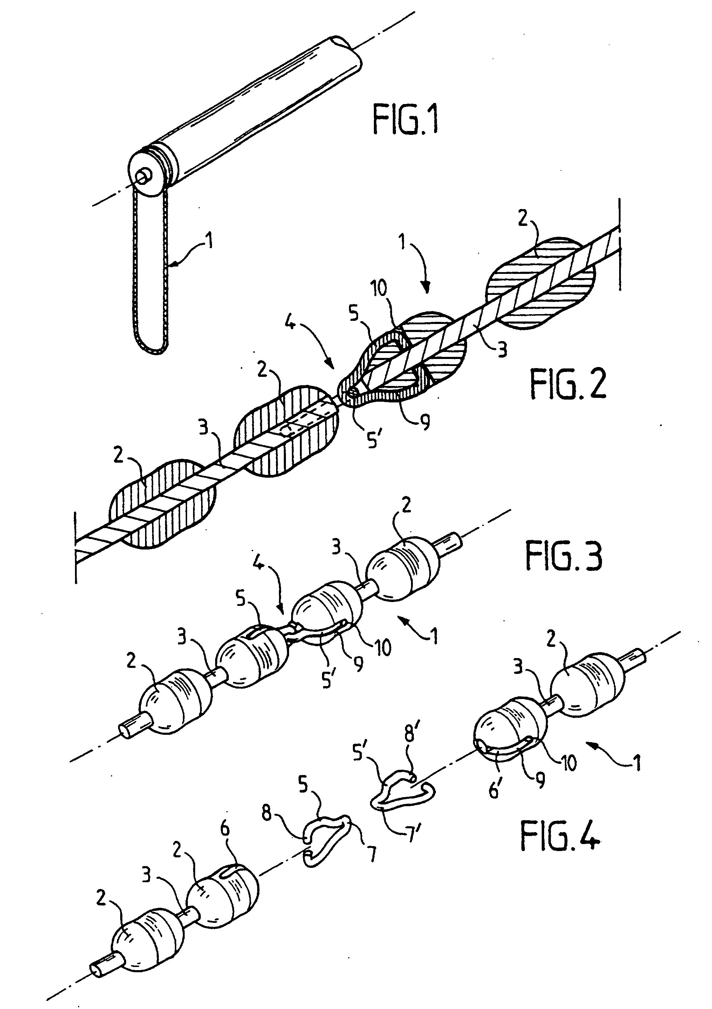

Selon une caractéristique avantageuse de l'invention, le dispositif de raboutage 4 comporte, d'une part un couple de maillons 5, 5' formant attache rapide, et d'autre part des usinages 6, 6' pratiqués dans les billes ou tores, assurant la coopération des maillons (cf. figures 3 et 4).

Les maillons 5, 5' formant l'attache rapide présentent un profil en forme de selle dont la partie sensiblement centrale 7, 7' est effilée, tandis que les extrémités libres 8, 8' sont repliées vers l'intérieur du maillon et forment des crochets.

Les usinages 6, 6' pratiqués dans les billes 2 ou tores dans lesquels doivent coopérer les maillons 5, 5' de l'attache rapide, consistent d'une part en une rainure 9 périphérique, et d'autre part en un perçage 10 sensiblement dans un plan perpendiculaire par rapport au plan de la rainure 9.

Lors de l'assemblage de deux maillons 5, 5', les parties centrales 7, 7' respectives de chacun d'entre eux s'entrelacent, tandis que les parties d'extrémité 8, 8' sont légèrement écartées de manière à pouvoir venir se loger dans les rainures 9 et les perçages 10 pratiqués sur chacun des organes 2 que l'on veut rabouter.

La solidarisation mécanique est obtenue en rapprochant les parties préalablement écartées à l'aide notamment d'une pince.

Selon une autre caractéristique de l'invention, on prévoit de positionner ce dispositif de raboutage selon un pas donné et de manière uniformément répartie sur la longueur de la chaînette 1, tel que notamment tous les 15 ou 30 cm par exemple.

Ce dispositif de raboutage impose donc deux sortes d'organes 2, certains étant classiques, tandis que les autres (ceux destinés à être raboutés) sont dits des organes d'extrémité.

L'invention telle que décrite précédemment offre de multiples avantages :
- le dispositif de raboutage ne crée pas de surépaisseur, nuisible au fonctionnement lors du passage du cordon à l'intérieur du mécanisme du treuil,
- l'opération de raboutage ou d'adaptation de la longueur de la chaînette peut s'effectuer lors de la pose finale du caisson de volet roulant sans outillage spécifique et coûteux (une simple pince coupante permet de couper le cordon au ras des organes d'extrémité et ensuite une pince plate suffit pour refermer les maillons sur chaque bille).

Il demeure bien entendu que la présente invention n'est pas limitée aux exemples de réalisation décrits et représentés ci-dessus, mais qu'elle en englobe toutes les variantes. Ainsi, cette chaînette pourvue de ce type de dispositif de raboutage peut être utilisée pour manoeuvrer des stores ou voilages, pour actionner des bondes d'éviers ou de baignoires ou encore dans des articles de lunetterie, ou plus généralement pour permettre de relier un objet à un support afin d'éviter que celui-ci ne s'égare.

## Revendications

1. Chaînette (1), notamment pour treuil à cordon, comportant une âme sur laquelle est reliée une pluralité d'organes (2) d'extrémités, comprenant entre deux organes (2) d'extrémités, au moins un dispositif de raboutage comportant, d'une part un couple de maillons (5, 5') formant attache rapide, et d'autre part des usinages (6, 6') pratiqués dans les organes d'extrémités (2), ladite chaînette étant **caractérisée en ce que** lesdits maillons (5, 5') présentent un profil en forme de selle dont la partie sensiblement centrale (7, 7') est effilée, tandis que les extrémités libres (8, 8') sont repliées vers l'intérieur du maillon et forment des crochets, de manière à conserver la flexibilité de l'ensemble sans risque de coincement dans le mécanisme du treuil.

2. Chaînette selon la revendication 1, **caractérisée en ce que** les usinages (6, 6') consistent d'une part en une rainure (9) périphérique, et d'autre part en un perçage (10) sensiblement dans un plan perpendiculaire par rapport au plan de la rainure (9).

3. Chaînette selon l'une des revendications 1 ou 2, **caractérisée en ce que** le dispositif de raboutage est positionné selon un pas donné et de manière uniformément répartie sur la longueur de la chaînette (1).

4. Chaînette selon la revendication 3, **caractérisée en ce que** le pas est compris dans une fourchette de 15 à 30 cm.

## Patentansprüche

1. Kette (1), insbesondere für eine Seilwinde, die eine Seele umfasst, auf welcher eine Vielzahl von Innen- und Endgliedern (2) angeordnet ist, die zwischen zwei Endgliedern (2) mindestens ein Kettenverbindungsglied enthalten, das einerseits ein Paar Haken (5, 5'), das einen Schnellverschluss bildet, und andererseits spanend hergestellte Materialausnahmen (6, 6'), die in den Endgliedern (2) angebracht sind, umfasst, wobei die Kette **dadurch gekennzeichnet ist, dass** die Haken (5, 5') ein sattelförmiges Profil aufweisen, dessen annähernd zentraler Teil (7, 7') sich verjüngend zuläuft, während die freien Enden (8, 8') zum Inneren des Hakens umgebogen sind und derart Nasen bilden, dass die Flexibilität des Ganzen erhalten bleibt, ohne dass die Gefahr eines Verklemmens im Windenmechanismus besteht.

2. Kette nach Anspruch 1, **dadurch gekennzeichnet, dass** die spanend hergestellten Materialausnahmen (6, 6') einerseits aus einer Umfangsnut (9) und andererseits aus einer Bohrung (10), die im Wesentlichen in einer zur Ebene der Nut (9) senkrechten Ebene verläuft, bestehen.

3. Kette nach Anspruch 1 oder 2, **dadurch gekennzeichnet, dass** das Kettenverbindungsglied mit einer gegebenen Teilung und gleichmäßig über die Länge der Kette (1) verteilt angeordnet ist.

4. Kette nach Anspruch 3, **dadurch gekennzeichnet, dass** sich die Teilung in einem Bereich von 15 bis 30 cm befindet.

## Claims

1. Small chain (1), in particular for a rope windlass, comprising a core to which is connected a plurality of end members (2) comprising, between two end members (2), at least one joining device comprising, on the one hand, a pair of links (5, 5') forming a rapid-action fastener and, on the other hand, machining (6, 6') carried out in the end members (2), said small chain being **characterised in that** said links (5, 5') have a saddle-shaped profile of which the substantially central portion (7, 7') is tapered whereas the free ends (8, 8') are folded back toward the interior of the link and form hooks so as to maintain the flexibility of the assembly without the risk of jamming in the windlass mechanism.

2. Small chain according to claim 1, **characterised in that** the machining (6, 6') consists, on the one hand, of a peripheral groove (9) and, on the other hand, of a perforation (10) substantially in a plane perpendicular to the plane of the groove (9).

3. Small chain according to either of claims 1 or 2, **characterised in that** the lengthening device is positioned at a given pitch and in a uniformly distributed manner over the length of the small chain (1).

4. Small chain according to claim 3, **characterised in that** the pitch is within a range of 15 to 30 cm.
